Europäisches Patentamt

European Patent Office

Office européen des brevets

(11) Veröffentlichungsnummer: **0 340 760 B1**

(12) **EUROPÄISCHE PATENTSCHRIFT**

(45) Veröffentlichungstag der Patentschrift:
04.12.91 Patentblatt 91/49

(51) Int. Cl.⁵: **B61D 3/10, B61G 5/02,**
**B61D 17/20, B60D 5/00**

(21) Anmeldenummer: 89108036.8

(22) Anmeldetag: 03.05.89

(54) Gelenkverbindung.

(30) Priorität: 06.05.88 DE 3815540

(43) Veröffentlichungstag der Anmeldung:
08.11.89 Patentblatt 89/45

(45) Bekanntmachung des Hinweises auf die
Patenterteilung:
04.12.91 Patentblatt 91/49

(84) Benannte Vertragsstaaten:
AT CH DE FR IT LI

(56) Entgegenhaltungen:
EP-A- 0 032 079
DE-B- 1 147 254
DE-B- 1 193 981

(73) Patentinhaber: Waggon Union GmbH
W-5900 Siegen (DE)

(72) Erfinder: Kramer, Rolf
Lohweg 2
W-5900 Siegen 21 (DE)
Erfinder: Kühnel, Arne
Lipaerstrasse 3
W-1000 Berlin 45 (DE)
Erfinder: Veit, Emil
Kantstrasse 148
W-1000 Berlin 12 (DE)

(74) Vertreter: Dahlkamp, Heinrich-Leo, Dipl.-Ing.
Thyssen Industrie AG Patentabteilung Am
Thyssenhaus 1 Postfach 10 37 45
W-4300 Essen 1 (DE)

## Beschreibung

Die Erfindung betrifft eine Gelenkverbindung, insbesondere für mehrgliedrige Schienenfahrzeuge, bei denen mindestens ein Fahrzeugteil mit mindestens zwei Fahrwerken ausgerüstet ist, jedes weitere Fahrzeugteil sich auf dieses Fahrzeugteil bzw. auf ein weiteres abstützt und die Gelenkverbindung horizontale und vertikale Auslenkbewegungen der Fahrzeugteile gegeneinander zuläßt.

Bei einer bekannten Gelenkverbindung zwischen zwei benachbarten Wagenkästen eines Schienengliederzuges nach der DE-C-2826779 besteht die Gelenkverbindung aus einer bei Kurvenfahrt zwangsläufig einstellbaren horizontalen Drehscheibe, die jeweils auf einem Endträger der Wagenkästen in Fußbodenhöhe aufliegt, einer an den Stirnwänden der Wagenkästen umlaufend angeschlossenen Balgeinrichtung und einem gemeinsamen Drehgestell, auf dem die benachbarten Enden der Wagenkästen mittels an ihren Endträgern befestigter, über diese hinausragender und jeweils paarweise vorgesehener Stützarme ruhen, wobei die Stützarme des einen Wagenkastens mit einem drehbaren inneren Drehkranzring und die Stützarme des anderen Wagenkasten mit einem drehbaren äußeren Drehkranzring eines auf deren abgefederten Wiege des Drehgestell befestigten horizontalen Kugeldrehkranzes derart verbunden sind, daß ein relatives Verschwenken der beiden Wagenkästen in horizontaler und vertikaler Richtung möglich ist, wobei die Drehscheibe eine in der vertikalen Quermittelebene verlaufende Schiene aufweist und eine in dem Raum zwischen der Drehscheibe und den Stützarmen der untere horizontale Teil, der als einteiliger Faltenbalg ausgebildeten Balgeinrichtung frei beweglich angeordnet ist.

Bei einer weiteren bekannten Verbindungseinrichtung dieser Art nach der DE-A-1755400 ist die in der vertikalen Quermittelebene der Drehscheibe verlaufende horizontale Schiene als Hohlschiene ausgebildet, in der die einen gelenkig miteinander verbundenen Enden paarweise zusammengefaßter Lenker verschiebbar geführt sind, deren andere Enden jeweils an einem der Wagenkästen angelenkt sind.

Da die Führung der Lenker in der Hohlschiene möglichst ohne Querspiel zu erfolgen hat, um den Geräuschpegel niedrig zu halten und die Anlenkung der Segmente der Drehscheibe an der Hohlschiene gegenüber der Führung der Lenker in der Hohlschiene versetzt ist, ebenso wie die Auflage der Segmente auf den Wagenkästen gegenüber der Anlenkung der Lenker am Wagenkasten, hat sich ein relativ großer Verschließ und bei Kuppenfahrt oder größerem Schienenversatz ein Verklemmen der Lenker in der Hohlschiene gezeigt. Außerdem besitzen diese Ausführungen eine große Bauhöhe der unteren Anlenkung, die der Ausbildung einer niedrigen Fußbodenhöhe hindernd entgegensteht und die segmentartigen Ringe des Kugeldrehkranzes sind ungüstig belastet. Weiter ist bei dieser Art Gelenkverbindung zwischen den Wagenkästen eines Schienengliederzuges eine obere Abstützung zwischen den Wagenkästen erforderlich, um bei Fliegkraftüberschuß oder Verwindung der Wagenkästen gegeneinander einen Querkraftausgleich zu erzielen.

Bekannt ist auch eine Gelenkverbindung von mehrgliedrigen Schienenfahrzeugen mit einem auf dem gemeinsamen Drehgestell der benachbarten Enden zweier Wagenkästen angeordneten dreiteiligen Kugeldrehkranz, auf dem wieder über Kragarme die Wagenkästen horizontal und vertikal schwenkbargelagert sind. Die Nachteile dieser Ausführung sind identisch mit den zu der DE-C-2826779 und der DE-A-1755400 beschriebenen Merkmalen. Das gilt auch für eine Verbindung zwischen den Wagenkästen eines Schienengliederzuges, die auf einem gemeinsamen Drehgestell mit den benachbarten Wagenkastenenden ruhen und eine Kugeldrehpfanne auf dem Drehgestell aufweist, die ebenfalls wieder über Kragarme an den Wagenkästen angelenkt ist.

Aus der EP-A-0032079 ist ebenfalls eine gattungsgemäße Gelenkverbindung, insbesondere für Autobusse bekannt, bei dem die Verbindung der Fahrzeugteile aus segmenten eines Drehkranzes bestehen, die einer hohen spezifischen Belastung und erheblichem Verschleiß ausgesetzt sind.

Die Aufgabe vorliegender Erfindung bestand nunmehr darin, eine Gelenkverbindung der eingangs genannten Art so auszubilden, daß eine extrem niedrige Bauhöhe zur Erreichung eines niedrigen Wagenfußbodens erreicht wird, daß die obere Anlenkung zwischen den benachbarten Enden der Wagenkästen entfallen kann, daß ein deutlich geringeres Gewicht als bei den vorbekannten Ausführungen erreicht wird und daß im übrigen die Nachteile der vorbekannten Ausführungen vermieden werden.

Diese Aufgabe wird gemäß der Erfindung dadurch gelöst, daß zwischen den Fahrzeugteilen ein um eine vertikale Achse drehbarer, einen Außen- und einen Innenring aufweisender geschlossener Drehkranz angeordnet ist, ein Ring des Drehkranzes biege- und verwindungssteif mit dem einen Fahrzeugteil und der andere Ring des Drehkranzes über ein Gelenk mit horizontaler Drehachse verwindungssteif mit dem anderen Fahrzeugteil verbunden ist. Hierbei ist der Innenring mit einer oberen und einer unteren ebenen Abdeckplatte fest verbunden. Der Außenring des Drehkranzes ist fest in einer ebenen Tragplatte eingebunden, wobei entweder die Abdeckplatten fest an dem einen Fahrzeugteil und die Tragplatte gelenkig an dem einen Fahrzeugteil oder die Abkeckplatten gelenkig an dem einen Fahrzeugteil und die Tragplatte fest an dem anderen Fahrzeugteil angeschlossen sind. Die horizontale Mittelebene des Gelenkes liegt im Bereich der horizontalen Mittelebene

2

des Drehkranzes. Gemäß der Erfindung liegen die Anschlüsse der Abdeckplatten und der Tragplatte in den Fahrzeugteilen horizontal in einer Ebene.

Dadurch, daß Innenring und Außenring ineinander greifend gefaßt sind und der Innenring beidseitig angeschlossenen werden kann, daß die horizontale Schwenkachse in der horizontalen Mittelebene des Drehkranzes liegt, und daß sowohl der Innenring als auch der Außenring des Drehkranzes über ebene Platten direkt an den Enden der benachbarten Wagenkästen angeschlossen sind, wird eine extrem niedrige Bauhöhe der Gelenkverbindung erreicht Durch die erfindungsgemäße ausbildung der Gelenkverbindung wird weiter eine deutliche Gewichtsverminderung erzielt. Die Relativbewegung zwischen den beiden miteinander verbundenen Fährzeugteilen, zwischen den Fußböden und dem Gelenk und dem die Wagenenden verbindenden Faltenbalg wird auf ein Minimum reduziert.

Erfindungsgemäß ist die Tragplatte und der Außenring mit Spiel zwischen den Abdeckplatten des Innenringes gelagert. Erfindungsgemäß ist weiter das Gelenk der Tragplatte des Innenringes mit breiter Basis ausgeführt.

Ein weiterer, durch die Erfindung erzielbarer Vorteil besteht darin, daß auf eine Bühne oder Mittelportal und auf die obere Anlenkung zwischen den Enden der benachbarten Wagenkästen verzichtet werden kann, da die auftretenden Torsionskräfte über die breite Basis der erfindungsgemäßen Gelenkverbindung abgefangen werden.

Einzelheiten der Erfindung sind anhand eines Ausführungsbeispiels in der Zeichnung erläutert.

Es zeigen :

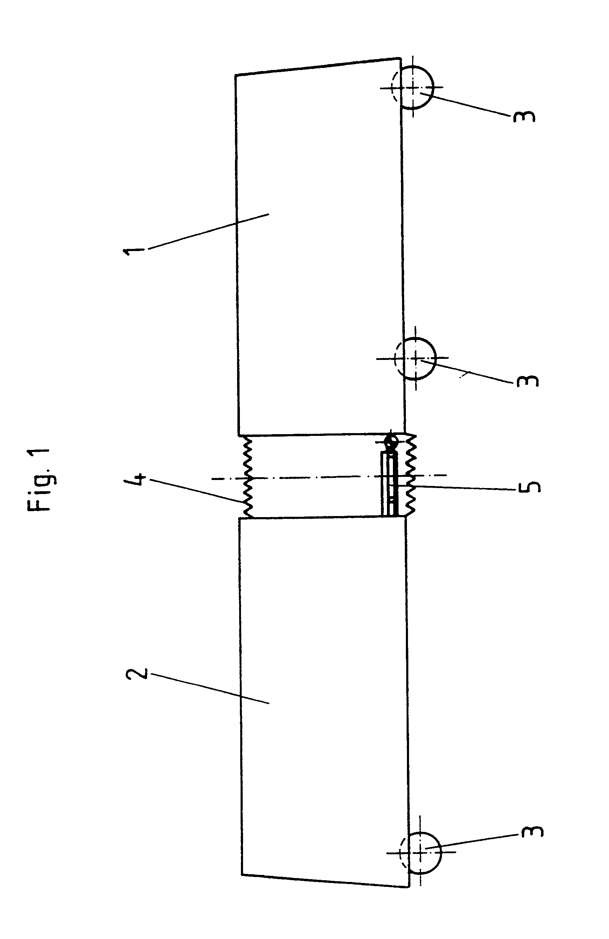

Fig. 1     die Seitenansicht eines mehrgliedrigen Schienenfahrzeugs mit der erfindungsgemäßen Gelenkverbindung in schematischer Darstellung,

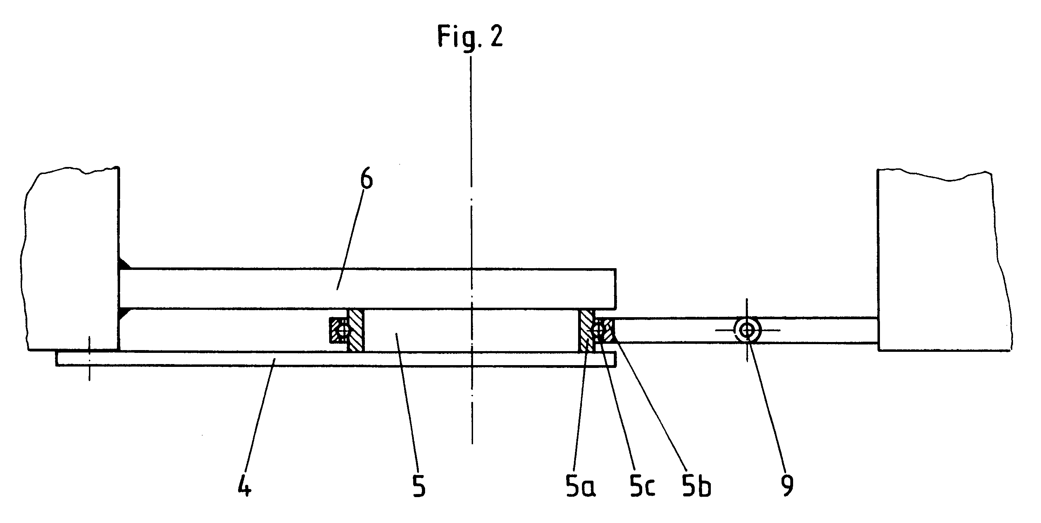

Fig. 2     einen vertikalen Längsschnitt durch die Gelenkverbindung gemäß der Erfindung in schematischer Darstellung,

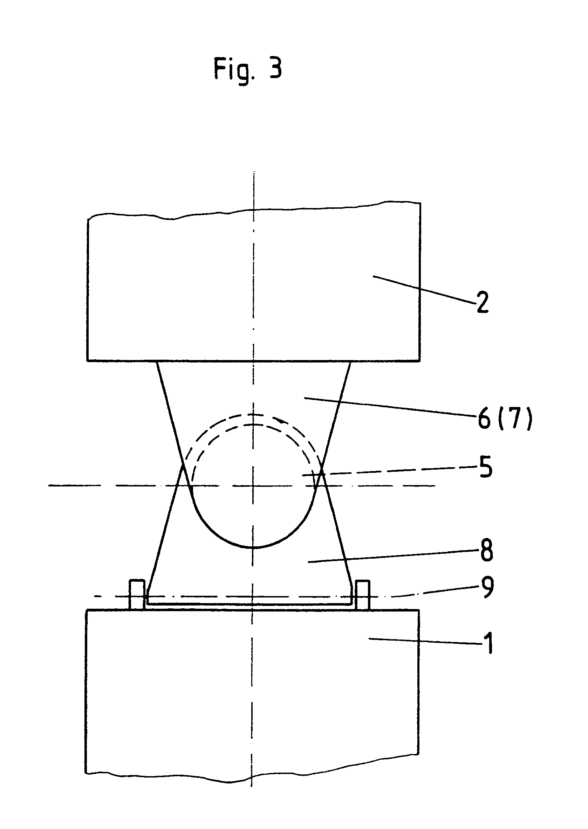

Fig. 3     die Draufsicht auf die Gelenkverbindung nach Fig. 2 in schematischer Darstellung.

Die erfindungsgemäße Gelenkverbindung ist in dem in der Zeichnung dargestellten Ausführungsbeispiel an einem zweigliedrigen Schienenfahrzeug erläutert. Das Schienenfahrzeug besteht dabei aus einem Endfahrzeugteil 1, das mit einem weiteren Fahrzeugteil 2 gelenkig verbunden ist. Das Endfahrzeugteil 1 weist dabei zwei Fahrwerke 3 und das angekuppelte weitere Fahrzeugteil 2 ein Fahrwerk 3 auf. Das Fahrzeugteil 2 stützt sich über die erfindungsgemäße Gelenkverbindung auf das Fahrzeugteil 1 ab. Die benachbarten Enden der beiden Fahrzeugteile 1 und 2 sind weiter mit einem aus der Praxis bekannten Faltenbalg 4 und einer nicht dargestellten Übergangseinrichtung im Bereich des Fußbodens der beiden Fahrzeugteile miteinander verbunden. Die erfindungsgemäße Gelenkverbindung besteht aus einem um eine vertikale Achse drehbaren, mittig zwischen den Enden der Fahrzeugteile 1 und 2 angeordneten Drehkranz 5, der in dem dargestellten Ausführungsbeispiel als Kugeldrehkranz ausgebildet ist und aus dem Innenring 5a, dem Außenring 5b und den Kugeln 5c besteht. Der Innenring 5a des Drehkranzes 5 ist dabei mit einer oberen Abdeckplatte 6 und einer unteren Abdeckplatte 7 vollflächig fest verbunden, wobei die Abdeckplatten 6 und 7 eben ausgebildet und fest an dem Ende des einen Fahrzeugteils 2 angeschlossen sind. Der Außenring 5b des Drehkranzes ist fest in einer Bohrung einer horizontal angeordneten Tragplatte 8 befestigt, die über ein horizontales Gelenk 9 schwenkbar an dem Ende des anderen Fahrzeugteils 1 gelagert ist. Sowohl die Abdeckplatten 6 und 7 als auch die Tragplatte 8 mit ihrem Gelenk 9 sind mit breiter Basis an den Fahrzeugteilen 1 und 2 eben angeschlossen. Zur freien Drehung des Außenringes 5b des Drehkranzes 5 zwischen den Abdeckplatten 6 und 7 des Innenringes 5a des Drehkranzes 5 sind sowohl der Außenring 5b als auch die Tragplatte 8 mit vertikalem Spiel zwischen den Abdeckplatten 6 und 7 angeordnet.

Zur elastischen, schall- und stoßabsorbierenden Verbindung zwischen den Fahrzeugteilen 1 und 2 ist das Gelenk 9 mit nicht dargestellten Gummibuchsen ausgerüstet.

Die Anordnung und Ausbildung des Faltenbalges 4 sowie die Ausbildung der nicht dargestellten Übergangseinrichtung zwischen den beiden Fahrzeugteilen 1 und 2 sind erfindungsunwesentlich und somit nicht näher erläutert.

Über den Drehkranz 5 können die beiden Fahrzeugteile 1 und 2 horizontal ausgelenkt werden, während über die Gelenkverbindung 9 die vertikale Beweglichkeit der Fahrzeugteile 1 und 2 gegeneinander gewährleistet ist. Die breite Basis der Anschlüsse der Abdeckplatten 6 und 7 sowie der Tragplatte 8 mit ihrer Gelenkverbindung 9 an den Fahrzeugteilen 2 bzw. 1, sowie der große Druchmesser des Drehkranzes gewährleisten die torsionssteife Verbindung der Fahrzeugteile 1 und 2. Die vertikale Abstützung des Fahrzeugteils 2 auf das Fahrzeugteil 1 ist über die Abdeckplatten 6 und 7, den Drehkranz 5, die Tragplatte 8 und die Gelenkverbindung 9 gewährleistet.

EP 0 340 760 B1

## Patentansprüche

1. Gelenkverbindung, insbesondere für mehrgliedrige Schienenfahrzeuge, bei denen mindestens ein Endfahrzeugteil mit mindestens zwei Fahrwerken ausgerüstet ist, jedes weitere Fahrzeugteil sich auf das Endfahrzeugteil bzw. auf das vordere abstützt und die Gelenkverbindung horizontale und vertikale Auslenkbewegungen der Fahrzeugteile gegeneinander zuläßt, dadurch gekennzeichnet, daß zwischen den Fahrzeugteilen (1 und 2) ein um eine vertikale Achse drehbarer, einen Außen- und einen Innenring (5b und 5a) aufweisender geschlossener Drehkrenz (5) angeordnet ist, ein Ring (5a oder 5b) des Drehkranzes (5) biege- und verwindungssteif mit dem einen Fahrzeugteil (1 oder 2) und der andere Ring (5b oder 5a) des Drehkranzes (5) über ein Gelenk (9) mit horizontaler Drehachse verwindungssteif mit dem anderen Fahrzeugteil (1) verbunden ist.

2. Gelenkverbindung nach Anspruch 1, dadurch gekennzeichnet, daß der Innenring (5a) mit einer oberen und einer unteren ebenen Abdeckplatte (6 und 7) fest verbunden ist.

3. Gelenkverbindung nach den Ansprüchen 1 und 2, dadurch gekennzeichnet, daß der Außenring (5b) des Drehkranzes (5) fest in einer ebenen Tragplatte (8) eingebunden ist.

4. Gelenkverbindung nach den Ansprüchen 1 bis 3, dadurch gekennzeichnet, daß entweder die Abdeckplatten (6 und 7) fest an dem einen Fahrzeugteil (1 oder 2) und die Tragplatte (8) gelenkig an dem anderen Fahrzeugteil (2 oder 1) oder die Abdeckplatten (6 und 7) gelenkig an dem einen Fahrzeugteil (1 oder 2) und die Tragplatte (8) fest an dem anderen Fahrzeugteil (2 oder 1) angeschlossen sind.

5. Gelenkverbindung nach den Ansprüchen 1 bis 4, dadurch gekennzeichnet, daß die horizontale Mittelebene des Gelenkes (9) im Bereich der horizontalen Mittelebene des Drehkranzes (5) liegt.

6. Gelenkverbindung nach den Ansprüchen 1 bis 5, dadurch gekennzeichnet, daß die Anschlüsse der Abdeckplatten (6 und 7) und der Tragplatte (8) an den Fahrzeugteilen horizontal in einer Ebene liegen.

7. Gelenkverbindung nach den Ansprüchen 1 bis 6, dadurch gekennzeichnet, daß die Tragplatte (8) und der Außenring (5b) mit Spiel zwischen den Abdeckplatten (6 und 7) des Innenringes (5a) gelagert sind.

8. Gelenkverbindung nach den Ansprüchen 1 bis 7, dadurch gekennzeichnet, daß das Gelenk (9) der Tragplatte (8) des Innenringes (5a) mit breiter Basis ausgeführt ist.

9. Gelenkverbindung nach den Ansprüchen 1 bis 8, dadurch gekennzeichnet, daß die Lager des Gelenkes (9) mit Gummibuchsen versehen sind.

## Claims

1. Hinged connection, in particular for multiple-unit rail vehicles of which at least one end unit is provided with at least two bogies, with each additional unit being supported on the end unit and/or the front unit, and with the hinged connection permitting horizontal and vertical deflections against each other, characterized in that between the vehicle units (1 and 2) a closed rotating rim (5) is located which rotates around a vertical axis and is fitted with an outer and an inner ring (5b and 5a), one ring (5a or 5b) of the rotating rim (5) being connected to one unit (1 or 2) so that it is resistant to bending and torsion, and the other ring (5b or 5a) of the rotating rim (5) being connected to the other unit (1) through an articulation (9) with horizontal rotation axis so that it is resistant to torsion.

2. Hinged connection according to claim 1, characterized in that the inner ring (5a) is rigidly connected to a top and a bottom plane cover plate (6 and 7).

3. Hinged connection according to claims 1 and 2, characterized in that the outer ring (5b) of the rotating rim (5) is rigidly incorporated into a plane supporting plate (8).

4. Hinged connection according to claims 1 to 3, characterized in that either the cover plates (6 and 7) are rigidly connected to one of the units (1 or 2) and 5 the supporting plate (8) is hinged on the other unit (2 or 1), or the cover plates (6 and 7) are hinged on one of the units (1 or 2) and the supporting plate (8) is rigidly connected to the other unit (2 or 1).

5. Hinged connection according to claims 1 to 4 characterized in that the horizontal centre plane of the articulation (9) is positioned in the horizontal centre plane of the rotating rim (5).

6. Hinged connection according to claims 1 to 5, characterized in that the connections of the cover plates (6 and 7) and of the supporting plate (8) are positioned in one plane on the vehicle units.

7. Hinged connection according to claims 1 to 6, characterized in that the supporting plate (8) and the outer ring (5b) are positioned with a clearance between the cover plates (6 and 7) of the inner ring (5a).

8. Hinged connection according to claims 1 to 7, characterized in that the articulation (9) of the supporting plate (8) of the inner ring (5a) has a broad basis.

9. Hinged connection according to claims 1 to 8, characterized in that the bearings of the articulation (9)

4

are provided with rubber bushings.

**Revendications**

1. Liaison articulée, en particulier pour véhicules ferroviaires à plusieurs éléments, pour lesquels au moins une partie d'extrémité de véhicule est équipée d'au moins deux trains de roulement, chaque autre partie de véhicule prenant appui sur la partie d'extrémité de véhicule, ou sur la partie avant, et la liaison articulée admet des débattements d'articulation horizontaux et verticaux des parties de véhicule entre elles, caractérisée en ce qu'entre les parties de véhicule (1 et 2) est disposé une couronne rotative (5) fermée, tournant autour d'un axe vertical, et présentant une bague extérieure et une bague intérieure (5b et 5a), une bague (5a ou 5b) de la couronne rotative (5) étant reliée rigide en flexion et au gauchissement à l'une des parties de véhicule (1 ou 25) et l'autre bague (5b ou 5a) de la couronne rotative (5) étant reliée rigide au gauchissement à l'autre partie de véhicule (1), par une articulation (9) d'axe de rotation horizontale.

2. Liaison articulée selon la revendication 1, caractérisée en ce que la bague intérieure (5a) est reliée rigidement à une plaque de recouvrement supérieure et à une plaque de recouvrement inférieure (6 et 7).

3. Liaison articulée selon l'une des revendications 1 et 2, caractérisée en ce que la bague extérieure (5b) de la couronne rotative (5) est reliée rigidement par insertion dans une plaque de support plane (8).

4. Liaison articulée selon l'une des revendications 1 à 3, caractérisée en ce que, soit les plaques de recouvrement (6 et 7) sont raccordées rigidement à l'une des parties de véhicule (1 ou 2) et la plaque de support (8) est reliée articulée à l'autre partie de véhicule (2 ou 1), soit les plaques de recouvrement (6 et 7) sont raccordées articulées à l'une des parties de véhicule (1 ou 2) et la plaque de support (8) est reliée rigidement à l'autre partie de véhicule (2 ou 1).

5. Liaison articulée selon l'une des revendications 1 à 4, caractérisée en ce que le plan médian horizontal de l'articulation (9) est situé dans la zone du plan médian horizontal de la couronne rotative (5).

6. Liaison articulée selon l'une des revendications 1 à 5, caractérisée en ce que les raccordements des plaques de recouvrement (6 et 7) et de la plaque de support (8) sur les parties de véhicules sont situés horizontalement dans un plan.

7. Liaison articulée selon l'une des revendications 1 à 6, caractérisée en ce que la plaque de support (8) et la bague extérieure (5b) sont montés, avec du jeu, entre les plaques de recouvrement (6 et 7) de la bague intérieure (5a).

8. Liaison articulée selon l'une des revendications 1 à 7, caractérisée en ce que l'articulation (9) de la plaque de support (8) de la bague extérieure (5a) est réalisée avec une base large.

9. Liaison articulée selon l'une des revendications 1 à 8, caractérisée en ce que les paliers de l'articulation (9) sont pourvus de coussinets en caoutchouc

Fig. 1

Fig. 2

EP 0 340 760 B1

# Fig. 3